# EUROPÄISCHE PATENTSCHRIFT

(11) **EP 0 789 826 B1**
(45) Veröffentlichungstag und Bekanntmachung des Hinweises auf die Patenterteilung: **23.02.2000**
(21) Anmeldenummer: 95935941.5
(22) Anmeldetag: 17.10.1995
(51) Int. Cl.: F16L 55/10

(54) **VERSCHLUSSVORRICHTUNG ZUM VERSCHLIESSEN VON DRUCKMITTEL FÜHRENDEN KANÄLEN IN EINEM GEHÄUSE**
SEALING DEVICE FOR SEALING OFF CHANNELS CONDUCTING A PRESSURIZED MEDIUM IN A HOUSING
DISPOSITIF DE FERMETURE POUR L'OBTURATION DE CANAUX CONDUISANT UN FLUIDE SOUS PRESSION DANS UNE ENVELOPPE

(30) Priorität: 02.11.1994 DE 4439059
(43) Veröffentlichungstag der Anmeldung: 20.08.1997
(73) Patentinhaber: Continental Teves AG & Co. oHG, 60488 Frankfurt (DE)
(72) Erfinder: VOLZ, Peter, D-64291 Darmstadt (DE); WEISBROD, Helmut, D-61231 Bad Nauheim (DE); BURGDORF, Jochen, D-63075 Offenbach (DE); VOLKMAR, Werner, D-65510 Idstein (DE)
(86) Internationale Anmeldenummer: EP9504068
(87) Internationale Veröffentlichungsnummer: WO9614537

(56) Entgegenhaltungen:
- DE-U- 8 716 060

## Beschreibung

Die Erfindung betrifft eine Verschlußvorrichtung zum Verschließen von Duckmittel führenden Kanälen in einem Gehäuse nach dem Oberbegriff des Anspruchs 1.

Aus der Druckschrift DE-GM 87 16 060 ist bereits eine Verschlußvorrichtung zum Verschließen von Druckmittel führenden Bohrungen oder Kanälen hervorgegangen, die durch einen in eine Stufenbohrung eingepreßten Schließkörper eine formschlüssige Verbindung mit dem Gehäuse bildet. Das den Formschluß bewirkende Grundmaterial der Stufenbohrung wird in eine Einformung zwischen zwei den beiden Bohrungsabschnitten entsprechenden Kolbenabschnitte am Schließkörper plastisch verdrängt, wodurch die Befestigung und Abdichtung des Schließkörpers in der Gehäusebohrung zustande kommt. Der Schließkörper besteht vorzugsweise aus Automatenstahl und das Gehäuse aus Leichtmetall.

Um einen guten Korrosionsschutz zu erreichen, ist auf das Grundmaterial der Verschlußvorrichtung ein separater Oberflächenschutz aufgebracht.

Die Aufgabe der Erfindung ist es, eine Verschlußvorrichtung der gattungsbildenden Art derart zu gestalten, daß sich durch geringe Herstellkosten eine besonders sichere Befestigung und Abdichtung des Schließkörpers im Gehäuse ergibt, wobei fertigungsgerechte Eigenschaften und eine Erleichterung der Weiterverarbeitung gewährleistet sein soll.

Diese Aufgabe wird erfindungsgemäß durch die kennzeichnenden Merkmale des Patentanspruchs 1 gelöst.

Für die Materialeigenschaft des Gehäuses haben gemäß den Merkmalen des Anspruchs 2 die Werkstoffanteile Eisen und Magnesium großen Einfluß. Diese chemischen Elemente sind innerhalb bestimmter Mengengrenzen in einem die Verformbarkeit und Zerspanbarkeit des Gehäuses bestimmenden Massenverhältnis vorhanden.

Damit der Stahl durch Drehen, Fräsen, Bohren, Spanen gut bearbeitet werden kann und mechanisch beanspruchbar und dauerhaft hydraulisch dicht ist, wird im Anspruch 3 eine chemische Zusammensetzung vorgeschlagen, die innerhalb bestimmter Mengengrenzen im Stahl die vorbezeichneten Werkstoffeigenschaften bestimmen.

Zur Erfüllung der an die Werkstoffe des Gehäuses und des Schließkörpers gestellten Anforderungen, ist gemäß den Merkmalen der Ansprüche 4 bis 6 vorgesehen, den Stahl mittels Zugversuch hinsichtlich seiner erforderlichen Festigkeitseigenschaften zu spezifizieren. Hierzu werden in den Ansprüchen 4 bis 6 die geeigneten Kenngrößen (Streckgrenze, Zugfestigkeit, Bruchdehnung) der verwendeten Werkstoffe angegeben.

Der Anspruch 8 gibt die zur Beurteilung der Verformungseigenschaft und Zerspanbarkeit geeignete Werkstoffwerte an, die für wenig bis mittelharte Werkstoffe und damit für die gewählte Verschlußvorrichtung durch eine Brinell-Härteprüfung ermittelt wird.

Die in den Ansprüchen 9 bis 11 angegebenen Merkmale beschreiben ein zweckmäßiges Verfahren zur Überwachung des Einpreßvorgangs für den Schließkörper in das Gehäuse. Dieses Verfahren ermöglicht eine einfache, kosten- und zeitreduzierte Überwachung und Dokumentation des Herstellvorgangs, durch das Maßfehler, Festigkeitseigenschaften und Einpreßtiefe sicher erfaßt werden können.

Weitere Ziele, Merkmale, Vorteile und Anwendungsmöglichkeiten der vorliegenden Erfindung ergeben sich aus der nachfolgenden Beschreibung eines Ausführungsbeispiels anhand einer Zeichnung. Dabei bilden alle beschriebenen und/oder bildlich dargestellten Merkmale für sich oder in beliebig sinnvoller Kombination den Gegenstand der Erfindung, unabhängig von ihrer Zusammenfassung oder deren Rückbeziehung.

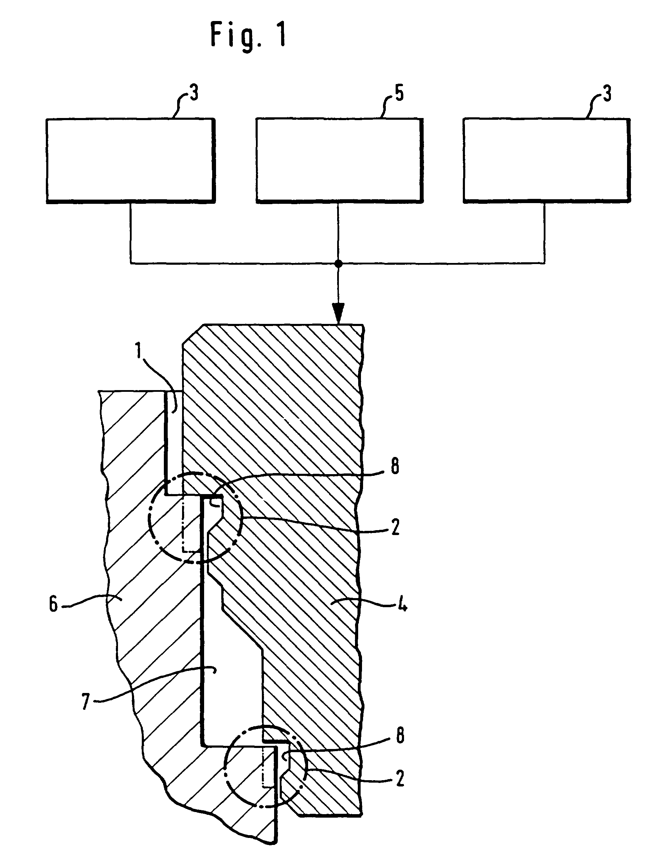

Die Figur 1 zeigt schematisch in einer Teilansicht eine Verschlußvorrichtung, die einen im wesentlichen stopfenförmigen Schließkörper aufweist, der mittels einer Selbstverstemmbefestigung in einer Stufenbohrung des im wesentlichen blockförmigen Gehäuse 6 angebracht ist. Die jeweils zwischen der Gehäusebohrung und dem Schließkörper 4 angedeutete Selbstverstemmstelle 2 wird jeweils durch das in eine Einformung 8 am Schließkörper 4 plastisch zu verdrängende Material des Gehäuses 6 hergestellt. Der Schließkörper 4 weist jeweils beiderseits an einer Einformung 8 sowohl am äußeren Bohrungsabschnitt 1 wie auch am inneren Bohrungsabschnitt 7 entsprechend angepaßte Kolbenabschnitte mit unterschiedlich großen Durchmessern auf, die während des Einpressens des Schließkörpers 4 in die Stufenbohrung den Umformvorgang des Gehäusewerkstoffes in die Einformungen 8 begünstigen. Die Einformungen 8 sind jeweils vergleichbar mit einer hohlkehlförmigen am Schließkörper 4 umlaufenden Ausnehmung, die außer der Erzeugung einer Haltekraft eine metallische Abdichtung bewirkt. Die Einformungen 8 am Schließkörper 4 sind hinsichtlich ihrer Geometrie in be-stimmten Grenzen frei wählbar. Erfindungsgemäß besteht der Schließkörper 4 aus Stahl, vorzugsweise kaltgezogenem Automatenstahl, womit die spanende Bearbeitung des Schließkörpers 4 erleichtert wird. Der Schließkörper 4 kann unproblematisch durch Drehen, Fräsen und Bohren bearbeitet werden. Die chemische Zusammensetzung des Schließkörpers 4, der dauerhaft fluidisch dicht sein muß, weist innerhalb bestimmter Mengengrenzen Anteile von Kohlenstoff, Silicium, Mangan, Phosphor, Schwefel, Blei und Stickstoff auf, die in prozentualen Massenanteilen für jedes der Elemente ausgedrückt, im Wertebereich von 0 bis 1,25 % liegen. Den prozentualen Höchstwert erreicht Mangan. Alle übrigen genannten Elemente liegen im Wertebereich von 0,04 bis 0,33 % ihrer Massenanteile an der chemischen Zusammensetzung des Stahls. Zur Erhöhung der Zerspanungsleistung und zur Verbesserung der Oberflächenglätte des Schließkörpers 4 ist bei Bedarf der beschriebene Stahl mit Tellur und Wismut zu legieren. Die prozentualen Massenanteile an der chemischen Zusammensetzung des Stahls sollen hierbei für Tellur 0,02 % und für Wismut 0,08 % nicht überschreiten. Damit ergeben sich die erforderlichen mechanischen Festigkeitseigenschaften für den Stahl, die eine Streckgrenze und Zugfestigkeit von mindestens 520 N/mm² ermöglichen. Die Bruchdehnung des Stahls erreicht bei der zuvor beschriebenen Zusammensetzung der chemischen Elemente Zahlenwerte, die oberhalb von 8 % liegen. Die Brinellhärte des kaltgezogenen Halbzeugs beträgt wenigstens 160 HB. Die aufgeführten Festigkeitswerte des Stahls beziehen sich auf Rundstangenmaterial für den Schließkörper 4 mit einem Durchmesser von wenigstens 15 mm. In dem ferritischen Grundgefüge der Stahlschmelze für den Schließkörper 4 ist der Perlit in lamellarer Form enthalten. Etwaige Einschlüsse von Mangan, Sulfiten und Blei sind auf ein Minimum zu begrenzen und dürfen nur sehr fein verteilt vorkommen. Bleizeilen sind nicht zulässig.

Das aus einer Aluminium-Knetlegierung bestehende Gehäuse 6 wird vorzugsweise aus einem Rechteckstangenmaterial hergestellt. Zur Verwendung für Pneumatik und Hydraulikblöcke sowie für Pumpengehäuse ist das Rechteckstangenmaterial warmgepreßt, wärmebehandelt und gerichtet. Eine gute Zerspanbarkeit durch Fräsen und Bohren sowie die für die Selbstverstemmstelle 2 notwendige Voraussetzung zur plastischen Verformung und Dichtheit des Gehäuses 6 werden von den jeweiligen prozentualen Massenanteilen der Einzelelemente Silicium, Eisen, Kupfer, Mangan, Magnesium, Chrom, Zink und Titan an der chemischen Zusammensetzung der Aluminium-Knetlegierung beeinflußt und sind hierzu auf einen Wert von 1,2 Prozent für die genannten Elemente begrenzt. Insbesondere die Massenanteile der einzelnen Elemente Mangan, Kupfer, Chrom, Zink und Titan liegen jeweils erheblich unter dem Grenzwert von 1,2 %.

Damit erhält das Gehäuse 6 die notwenigen mechanischen Eigenschaften, die eine Streckgrenze von 230 bis 330 N/mm² und eine Zugfestigkeit von 310 bis 380 N/mm² erreichen. Die Bruchdehnung der Aluminium-Knetlegierung liegt damit bei etwa 12 %. Die Werte für die mechanische Eigenschaften, die quer zur Preßrichtung erreicht werden, können hierbei bis zu 15 % unter den vorangegangenen Werten in Längsrichtung der Rechteckstange liegen. Die Brinellhärte des Gehäuses 6 beträgt hierbei im Kern der Rechteckstange bei einem Belastungsgrad gleich zehn wenigstens 90 bis 110 HB.

Der Einpreßvorgang des Schließkörpers 4 in das Gehäuse 6 wird durch ein Verfahren überwacht, das etwaige Maßfehler und Abweichungen von den vorgegebenen Werkstoffspezifikationen erfaßt. Dies geschieht auf einfache Weise durch die meßtechnische Überwachung einer durch ein Einpreßmittel 5 (Force Generating Means) ausgeübten Einpreßkraft auf den Schließkörper 4 in Abhängigkeit von der zurückgelegten Wegstrecke des einzupressenden Teils (Schließkörper 4). Die hierfür erforderlichen Meßwertaufnehmer 3 (Force Control Means, Travel Control Means) sind nicht Inhalt des erfindungsgemäß vorgeschlagenen Überwachungsverfahrens, weshalb auf funktionelle und bauliche Einzelheiten der Meßwertaufnehmer 3 nicht eingegangen wird. Die meßtechnisch erfaßte Wegstrecke und Einpreßkraft wird sodann als Kraft-Weg-Funktion auf ihre charakteristischen Merkmale wie Steigung und Unstetigkeitspunkte eines aus der Kraft-Weg-Funktion gebildeten Kennlinienverlaufs permanent überwacht, wobei im einfachsten Fall zur Überwachung des Einpreßvorganges Toleranzfelder für den Kraft- bzw. Wegverlauf festgelegt sind, die eine qualitative Bewertung des Einpreßvorganges ermöglichen.

Durch die vorgeschlagenen werkstoff- und verfahrenstechnischen Merkmale ist somit eine hoch beanspruchbare Verschlußvorrichtung zum Verschließen von Druckmittel führenden Bohrungen und Kanäle geschaffen, so daß auf das Erfordernis separater Abdicht- und Haltemaßnahmen verzichtet werden kann. Die Erfindung findet vorzugsweise Anwendung für pneumatische und hydraulische Baugruppen der Kraftfahrzeug-Bremsentechnik.

### Bezugszeichenliste

- 1: Bohrungsabschnit
- 2: Selbstverstemmstelle
- 3: Meßwertaufnehmer
- 4: Schließkörper
- 5: Einpreßmittel
- 6: Gehäuse
- 7: Bohrungsabschnitt
- 8: Einformung

## Patentansprüche

1. Verschlußvorrichtung zum Verschließen von Druckmittel führenden Kanälen in einem Gehäuse durch einen in einen Kanal eingepreßten Schließkörper, an dessen Außenumfang wenigstens eine Einformung angeordnet ist, in die durch Einpressen des Schließkörpers in den Kanal Grundmaterial des Gehäuses zur Bildung eines Formschlusses verdrängt ist, wobei der Kanal als Stufenbohrung ausgebildet ist, dessen von der Druckmittelseite abgewandter, äußerer Bohrungsabschnitt mit größerem Durchmesser über einen Absatz in einen der Druckmittelseite zugewandten inneren Bohrungsabschnitt mit kleinerem Durchmesser übergeht und wobei der Schließkörper zwei den beiden Bohrungsabschnitten entsprechende Kolbenabschnitte mit unterschiedlich großen Durchmessern aufweist, zwischen denen die relativ zum kleineren Durchmesser hinterschnittene Einformung ausgebildet ist, in die durch plastische Verformung das den Formschluß bewirkende Grundmaterial gepreßt ist, **dadurch gekennzeichnet**, daß das Gehäuse (6) aus einer Aluminium-Knetlegierung besteht, die zu einem warmgepreßten, wärmebehandelten und gerichteten Profil ausgebildet ist, dessen Siliziumgehalt maximal 1, 2 Prozent beträgt und wesentlich größer ist als die jeweiligen prozentualen Massenanteile der Elemente Mangan, Kupfer, Chrom, Zink und Titan, und daß der Schließkörper (4) aus Stahl mit einer ferritischen Grundmasse besteht, mit einem Bleigehalt von 0,04 bis 0,33 Prozent, der kleiner ist als der Mangangehalt von maximal 1,25 Prozent der Masse des Schließkörpers (4).

2. Verschlußvorrichtung nach Anspruch 1, **dadurch gekennzeichnet**, daß das als Aluminium-Knetlegierung ausgeführte Aluminium mindestens eines oder vorzugsweise mehrere der folgenden chemischen Elemente Eisen und Magnesium aufweist.

3. Verschlußvorrichtung nach Anspruch 1, **dadurch gekennzeichnet**, daß der Stahl mindestens eines oder vorzugsweise mehrere der folgenden chemischen Elemente Kohlenstoff, Silicium, Phosphor, Schwefel, Stickstoff aufweist.

4. Verschlußvorrichtung nach Anspruch 1, **dadurch gekennzeichnet**, daß die Streckgrenze des Stahls in Preßrichtung zumindest 520 N/mm² und die Streckgrenze des Aluminiums mindestens 230 bis 330 N/mm² beträgt.

5. Verschlußvorrichtung nach Anspruch 1, **dadurch gekennzeichnet**, daß die Zugfähigkeit des Stahls in Preßrichtung mindestens 520 N/mm² bis 650 N/mm² beträgt und die des Aluminiums mindestens 310 bis 380 N/mm².

6. Verschlußvorrichtung nach Anspruch 1, **dadurch gekennzeichnet**, daß die Bruchdehnung ders Aluminiums in Preßrichtung mindestens 30 % und die des Stahls in Preßrichtung mindestens 8 % beträgt.

7. Verschlußvorrichtung nach mindestens einem der vorhergehenden Ansprüche 4 bis 6, **dadurch gekennzeichnet**, daß die Streckgrenze, Zugfestigkeit und Bruchdehnung des Aluminiums quer zur Preßrichtung bis zu 15 % unter dem Wert in Längsrichtung liegen.

8. Verschlußvorrichtung nach Anspruch 1, **dadurch gekennzeichnet**, daß die Brinellhärte des Aluminiums mindestens 90 HB bis 110 HB und die des Stahls mindestens 160 HB beträgt, wobei die Brinellhärte des Aluminiums mit einem Belastungsgrad = 10 im Gefügekern ermittelt wird.

## Claims

1. Closing device for closing pressure fluid conveying channels in a housing by a closing member which is press fitted into a channel, the outside periphery of the closing member including at least one indentation into which, during press fitting the closing member into the channel, basic material of the housing is deformed to provide a form lock, and the channel is configured as a stepped bore having an outside bore portion of large diameter that is remote from the pressure fluid side which, through a step, is followed by an inside bore portion of smaller diameter that is close to the pressure fluid side, and wherein the closing member has two piston portions of differently large diameters which correspond to the two bore portions, and the indentation provided between the piston portions is undercut relative to the small diameter portion, and the basic material is press fitted by plastic deformation into the indentation to provide the form lock,
**characterized** in that the housing (6) is made of a square bar of malleable aluminum alloy which is hot-pressed, thermally treated and straightened, the silicon contents of which amounts to maximum 1.2 percent and is considerably greater than the respective mass shares of the elements manganese, copper, chromium, zinc, and titanium in percent, and in that the closing member (4) is made of steel including a ferritic basic material with a lead content of 0.04 to 0.33 percent which is less than the manganese contents of maximum 1.25 percent of the mass of the closing member (4).

2. Closing device as claimed in claim 1,
**characterized** in that the aluminum configured as a malleable aluminum alloy includes at least one or, preferably, more of the following chemical elements, iron and magnesium.

3. Closing device as claimed in claim 1,
**characterized** in that the steel includes at least one or, preferably, a plurality of the following chemical elements, such as carbon, silicon, phosphorus, sulphur, and nitrogen.

4. Closing device as claimed in claim 1,
**characterized** in that the yield strength of the steel in the pressing direction amounts to at least 520 N/mm², and the yield strength of the aluminum amounts to at least 230 to 330 N/mm².

5. Closing device as claimed in claim 1,
**characterized** in that the tensile strength of the steel in the pressing direction amounts to at least 520 N/mm² to 650 N/mm², and the tensile strength of the aluminum amounts to at least 310 to 380 N/mm².

6. Closing device as claimed in claim 1,
**characterized** in that the breaking tension of the aluminum in the pressing direction amounts to at least 30 %, and the breaking tension of the steel in the pressing direction amounts to at least 8 %.

7. Closing device as claimed in at least any one of the preceding claims 4 to 6,
**characterized** in that the yield strength, tensile strength and breaking tension of the aluminum transversely to the pressing direction is up to 15 % below the value in the longitudinal direction.

8. Closing device as claimed in claim 1,
**characterized** in that the Brinell hardness of the aluminum amounts to at least 90 HB up to 110 HB, and the Brinell hardness of the steel amounts to at least 160 HB, the Brinell hardness of the aluminum being determined with a load factor equal to 10 in the structure core.

## Revendications

1. Dispositif d'obturation, servant à obturer des conduits ménagés dans un boîtier et transportant un agent de pression, au moyen d'un obturateur qui est enfoncé sous pression dans un conduit et sur la périphérie extérieure duquel est agencée au moins une partie en retrait dans laquelle, sous l'effet d'un enfoncement sous pression de l'obturateur dans le conduit, de la matière de base du boîtier est refoulée en vue de réaliser une solidarisation par complémentarité de formes, le conduit étant réalisé sous forme d'un alésage étagé dont la section extérieure d'alésage, située à l'opposé du côté de l'agent de pression et présentant un plus grand diamètre, se raccorde par un épaulement à une section intérieure d'alésage située du côté de l'agent de pression et présentant un plus petit diamètre, et l'obturateur comportant deux sections formant piston qui correspondent aux deux sections d'alésage et présentent des diamètres de grandeurs différentes et entre lesquelles est réalisée la partie en retrait qui est en contre-dépouille par rapport au plus petit diamètre et dans laquelle, sous l'effet d'une déformation plastique, la matière de base réalisant la solidarisation par complémentarité de formes est enfoncée sous pression, caractérisé en ce que le boîtier (6) est en un alliage corroyé d'aluminium qui est façonné en un profilé estampé à chaud, traité à chaud et dressé et dont la teneur en silicium vaut au maximum 1,2 pour cent et est essentiellement plus grande que les différentes proportions en masse en pour cent des éléments : manganèse, cuivre, chrome, zinc et titane et en ce que l'obturateur (4) est en acier comportant une masse de base ferritique présentant une teneur en plomb de 0,04 à 0,33 pour cent, qui est inférieure à la teneur en manganèse d'au maximum 1,25 pour cent de la masse de l'obturateur (4).

2. Dispositif d'obturation suivant la revendication 1, caractérisé en ce que l'aluminium réalisé sous forme d'alliage corroyé d'aluminium comporte au moins l'un, ou de préférence plusieurs, des éléments chimiques suivants : fer et magnésium.

3. Dispositif d'obturation suivant la revendication 1, caractérisé en ce que l'acier comprend au moins l'un, ou de préférence plusieurs, des éléments chimiques suivants : carbone, silicium, phosphore, soufre, azote.

4. Dispositif d'obturation suivant la revendication 1, caractérisé en ce que la limite d'élasticité de l'acier suivant la direction de l'enfoncement sous pression vaut au moins 520 N/mm² et la limite d'élasticité de l'aluminium au moins 230 à 330 N/mm².

5. Dispositif d'obturation suivant la revendication 1, caractérisé en ce que la résistance à la traction de l'acier suivant la direction de l'enfoncement sous pression vaut au moins 520 N/mm² à 650 N/mm² et celle de l'aluminium au moins 310 à 380 N/mm².

6. Dispositif d'obturation suivant la revendication 1, caractérisé en ce que l'allongement à la rupture de l'aluminium suivant la direction de l'enfoncement sous pression vaut au moins 30 % et celle de l'acier suivant la direction de l'enfoncement sous pression au moins 8 %.

7. Dispositif d'obturation suivant au moins l'une des revendications précédentes 4 à 6, caractérisé en ce que la limite d'élasticité, la résistance à la traction et l'allongement à la rupture de l'aluminium transversalement à la direction d'enfoncement sous pression sont situés jusqu'à 15 pour cent au-dessous de la valeur suivant la direction longitudinale.

8. Dispositif d'obturation suivant la revendication 1, caractérisé en ce que la dureté Brinell de l'aluminium vaut au moins 90 HB à 110 HB et celle de l'acier au moins 160 HB, la dureté Brinell de l'aluminium étant déterminée au coeur de la structure avec un degré de sollicitation = 10.
